# DEMANDE DE BREVET EUROPEEN

(11) **EP 1 914 130 A1**
(43) Date de publication de la demande: **23.04.2008**
(21) Numéro de dépôt: 07118511.0
(22) Date de dépôt: 15.10.2007
(51) Int. Cl.: B60S 1/34

(54) **Système d'essuyage à entraînement déporté.**

(30) Priorité: 20.10.2006 FR 0609229
(71) Demandeur: VALEO SYSTEMES D'ESSUYAGE, 78321 La Verrière (FR)
(72) Inventeur: Cerdan, Jérôme, 63570 Beaulieu (FR)
(74) Mandataire: Rosolen-Delarue, Katell

(57) **Abrégé**

L'invention propose un système d'essuyage (10) d'un panneau vitré (12) de véhicule automobile qui comporte :
- un balai d'essuyage (14) d'orientation principale longitudinale, comportant une lame (30) d'essuyage du panneau vitré (12) ;
- des moyens de pression du balai (14) sur le panneau vitré, qui exercent sur l'extrémité arrière du balai (14) un effort de pression (F),

caractérisé en ce que les moyens de pression exercent sur le balai (14) un effort supplémentaire (G) qui est produit de manière à répartir la pression de la lame (30) d'essuyage globalement symétriquement par rapport au milieu longitudinal du balai (14).

## Description

L'invention propose un système d'essuyage comportant un balai d'essuyage qui est monté sur une extrémité libre d'un bras d'entraînement par l'intermédiaire d'un connecteur d'articulation fixé à une extrémité du balai.

L'invention propose plus particulièrement un système d'essuyage d'un panneau vitré de véhicule automobile qui comporte un balai d'essuyage d'orientation principale longitudinale, comportant un élément structurel en forme de bande longitudinale horizontale et une lame longitudinale d'essuyage d'une face supérieure horizontale du panneau vitré, un bras d'entraînement du balai en mouvement de balayage alterné, dont une extrémité avant du bras est reliée à une extrémité longitudinale arrière du balai par l'intermédiaire d'un connecteur d'articulation du balai par rapport au bras autour d'un axe transversal horizontal et dont une extrémité arrière du bras est reliée à une tête de liaison qui est fixée à l'extrémité libre d'un arbre d'entraînement du bras et du balai en balayage alterné autour d'un axe globalement vertical, et des moyens de pression du balai sur le panneau vitré, qui exercent sur l'extrémité arrière du balai, par l'intermédiaire du bras d'entraînement, un effort de pression d'orientation globalement radiale par rapport à l'axe transversal.

Selon un mode de réalisation conventionnel, le bras d'entraînement est relié au balai par un connecteur qui est monté globalement au milieu du balai.

Cela permet d'avoir une répartition homogène des efforts de pression du balai sur le panneau vitré, pour que l'essuyage soit efficace.

Cependant, un tel mode de réalisation est peu agréable à la vue.

Afin d'améliorer l'aspect général du système d'essuyage, il a été proposé de monter le connecteur d'articulation au niveau d'une extrémité du balai, qui est la plus proche de l'arbre d'entraînement.

Ainsi, la longueur du bras d'entraînement est réduite, ce qui procure au système d'essuyage un aspect et une discrétion améliorés.

Le document US-A-6.651.292 décrit un tel type de système d'essuyage pour lequel le connecteur est monté à l'extrémité arrière du balai, et pour lequel la longueur du bras d'entraînement est réduite.

Cependant, l'effort de pression du balai sur le panneau vitré, qui est exercé par l'intermédiaire du bras d'entraînement, se répartit de manière égale de part et d'autre de l'axe transversal d'articulation.

Ainsi, une moitié de l'effort de pression est appliquée sur la portion du balai située longitudinalement en avant de l'axe d'articulation, et l'autre moitié de l'effort de pression est appliquée sur la portion du balai située longitudinalement en arrière de l'axe transversal d'articulation.

Le montage du connecteur à proximité de l'extrémité arrière du balai a pour conséquence que la longueur de la portion du balai située en arrière de l'axe transversal d'articulation est relativement réduite et est très inférieure à la longueur de la portion du balai située en avant de l'axe transversal d'articulation.

Ainsi, la moitié de l'effort de pression qui est appliquée sur la portion du balai située en arrière de l'axe transversal se répartit sur la faible longueur de la portion arrière du balai, et l'autre moitié de l'effort de pression se répartit sur la longueur plus importante de la portion avant du balai.

Il en résulte que la pression de contact de la portion de la lame, correspondant à la portion arrière du balai, sur le panneau vitré, est très importante, ce qui cause notamment une diminution de la durée de vie de la lame.

L'invention a pour but de proposer un système d'essuyage pour lequel le bras d'entraînement est relié au balai au niveau de l'extrémité arrière du balai, et pour lequel les efforts de pression du balai sur le panneau vitré sont répartis de manière homogène sur toute la longueur du balai.

Dans ce but, l'invention propose un système d'essuyage tel que décrit précédemment, caractérisé en ce qu'il comporte des moyens d'appui de l'extrémité arrière du balai, de manière à réduire les efforts de pression de la lame d'essuyage sur le panneau vitré, en arrière de l'axe transversal d'articulation.

Selon d'autres caractéristiques de l'invention :
- les moyens d'appui sont agencés au niveau de l'extrémité longitudinale arrière du balai ;
- les moyens d'appui sont solidaires du balai en balayage alterné autour de l'axe vertical ;
- les moyens d'appui comportent un élément élastique qui est porté par l'extrémité arrière du balai qui coopère avec la tête de liaison ;
- l'élément élastique est un tronçon arrière de l'élément structurel du balai, qui fait saillie longitudinalement vers l'arrière par rapport à l'extrémité arrière du balai;
- la tête de liaison comporte un doigt qui s'étend globalement longitudinalement vers l'avant, dont l'extrémité avant libre du doigt appuie vers le haut contre le tronçon arrière de l'élément structurel.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective du système d'essuyage selon l'invention comportant des moyens pour produire l'effort supplémentaire ; et
- la figure 2 est une section suivant un plan longitudinal vertical du système d'essuyage représenté à la figure 1, montrant les moyens pour produire l'effort supplémentaire.

Pour la description de l'invention, on adoptera à titre non limitatif les orientations verticale, longitudinale et transversale selon le repère V, L, T indiqué aux figures.

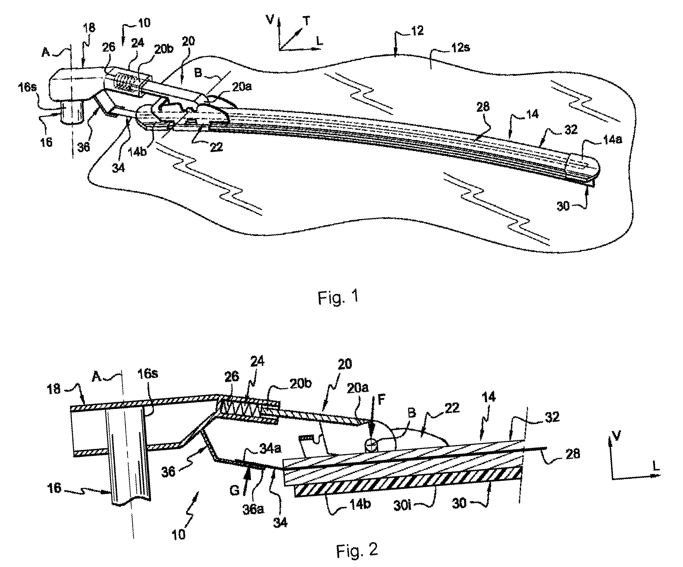

On adoptera aussi l'orientation d'avant en arrière comme étant la direction longitudinale et de droite à gauche en se reportant à la figure 1.

Dans la description qui va suivre, des éléments identiques, similaires ou analogues seront désignés par les mêmes chiffres de référence.

On a représenté à la figure 1 un système d'essuyage 10 d'un panneau vitré 12, ici globalement horizontal, qui comporte un balai 14 d'orientation principale longitudinale d'essuyage de la face supérieure horizontale 12s du panneau vitré 12 et des moyens d'entraînement du balai 14 en balayage alterné par rapport au panneau vitré 12.

Le balai 14 est un balai de faible hauteur, du type appelé "flat-blade", qui comporte un élément structurel 28, ou vertèbre, en forme d'une bande longitudinale horizontale, une lame inférieure 30 longitudinale d'essuyage du panneau vitré 12 et un élément 32 de liaison de la lame 30 avec l'élément structurel 28.

Ces moyens d'entraînement comportent un arbre d'entraînement 16 d'axe principal A globalement perpendiculaire au panneau vitré 12, c'est-à-dire ici vertical, dont l'extrémité inférieure (non représentée) est reliée à un mécanisme d'entraînement (non représenté) et dont l'extrémité supérieure 16s porte une tête de liaison 18.

Les moyens d'entraînement comportent aussi un bras d'entraînement 20 dont une extrémité avant 20a est reliée au balai 14 par l'intermédiaire d'un connecteur d'articulation 22, et dont l'extrémité arrière 20b est reliée à la tête de liaison 18, de manière à permettre au balai 14 de se déplacer globalement verticalement lors de son mouvement de balayage, pour adapter sa position verticale au galbe du panneau vitré 12.

Ainsi, les moyens d'entraînement sont ici réalisés de manière que le mouvement de balayage du balai 14 par rapport au panneau vitré 12 consiste en une rotation autour de l'axe principal vertical A de l'arbre 16.

L'extrémité arrière 20b du bras 20 est reliée à la tête de liaison de manière à permettre un mouvement vertical de l'extrémité avant 20a du bras 20 lors de son balayage, afin d'adapter la position verticale du balai 14 au galbe du panneau vitré 12.

On a représenté aux figures un exemple de liaison 18 de l'extrémité arrière 20b du bras 20 à la tête de liaison 18 selon lequel l'extrémité arrière 20b du bras 20 est montée coulissante dans un logement complémentaire 24 de la tête de liaison 18.

Ici, le logement 24 est débouchant à son extrémité avant, et il est orienté globalement vers le bas et vers l'avant, comme on peut le voir à la figure 2. Un ressort élastique 26 est disposé dans le logement 24 pour entraîner le bras 20 vers l'avant et vers le bas.

Il sera compris que l'invention n'est pas limitée à ce mode de réalisation des moyens de liaison du bras 20 à la tête 18, et que l'extrémité arrière 20b du bras 20 peut être reliée à la tête de liaison 18 par d'autres moyens.

L'extrémité avant 20a du bras 20 est reliée au balai 14 par l'intermédiaire du connecteur 22, de manière que le balai 14 est monté pivotant par rapport à l'extrémité avant 20a du bras 20 autour d'un axe transversal B situé au niveau de l'extrémité avant 20a du bras 20.

Le connecteur 22 est monté sur l'élément de liaison 32 du balai 14, par exemple en chevauchant verticalement l'élément de liaison 32.

De plus, pour conférer au système d'essuyage 10 un aspect esthétique agréable, le connecteur 22 est monté à proximité de l'extrémité longitudinale arrière 14b du balai 14. La longueur du bras 20 est par conséquent limitée.

Pour maintenir la lame d'essuyage 30 en appui sur la face supérieure 12s du panneau vitré 12, le bras 20 exerce un effort de pression sur le balai 14, par l'intermédiaire du connecteur 22, de manière que l'effort de pression est orienté vers le bas et globalement radialement par rapport à l'axe transversal B, comme on l'a représenté schématiquement par la flèche F à la figure 2.

Cet effort de pression permet à l'arête inférieure 30i de la lame 30 de s'appuyer sur toute sa longueur contre la face supérieure 12s du panneau vitré 12.

Cependant, l'effort de pression F est distribué de manière égale de part et d'autre de l'axe transversal B, de manière qu'une première moitié de l'effort de pression F est répartie sur la portion du balai 14 située en arrière de l'axe transversal B, et une deuxième moitié de l'effort de pression F est répartie sur la portion du balai 14 située en avant de l'axe transversal B.

Par conséquent, la pression de l'arête inférieure 30i de la lame d'essuyage 30, en arrière de l'axe transversal B est relativement importante du fait de la faible longueur de cette portion du balai 14 située en arrière de l'axe transversal B.

Pour réduire la valeur de cette pression de la portion l'arête inférieure 30i de la lame d'essuyage 30, située en arrière de l'axe transversal B, et selon l'invention, le système d'essuyage 10 comporte des moyens d'appui de l'extrémité arrière 14b du balai 14.

Ainsi, la première moitié de l'effort de pression F se répartit d'une part au niveau de l'arête inférieure 30i de la lame d'essuyage 30, située en arrière de l'axe transversal B, et d'autre part sur les moyens d'appui.

Pour conserver l'aspect esthétique relativement discret du système d'essuyage 10, les moyens d'appui sont agencés eux aussi à proximité de l'extrémité arrière 14b du balai 14.

Selon l'invention, les moyens d'appui comportent un élément élastique qui est porté par l'extrémité arrière 14b du balai 14 et qui coopère avec une portion associée de la tête 18.

Ainsi, les moyens d'appui sont solidaires du balai 14 lors de son mouvement de balayage par rapport au panneau vitré 12, ce qui permet de limiter la pression de l'arête inférieure 30i de la lame d'essuyage 30, située en arrière de l'axe transversal B, quelle que soit la position du balai 14 autour de l'axe vertical A.

Selon une variante de réalisation (non représentée), les moyens d'appui comportent un élément élastique qui est porté par l'extrémité arrière 14b du balai 14 et qui coopère avec une portion associée du bras d'entraînement 20.

Comme on peut le voir aux figures, l'élément élastique est formé par un tronçon arrière 34 de la vertèbre 28 du balai 14 qui fait saillie longitudinalement vers l'arrière par rapport à l'extrémité arrière 14b du balai 14, et s'étend longitudinalement vers l'avant au-delà de l'extrémité arrière 14b du balai 14.

Pour coopérer avec le tronçon arrière 34 de la vertèbre 28, la tête de liaison 18 comporte un doigt inférieur 36 qui s'étend globalement longitudinalement vers l'avant et qui est agencé au dessous du logement 24.

L'extrémité longitudinale arrière 34a du tronçon arrière 34 s'appuie sur l'extrémité avant libre du doigt inférieur 36 et le tronçon arrière 34 est déformé élastiquement, de manière que son extrémité arrière 34a exerce en permanence un effort sur l'extrémité libre 36a du doigt 36 qui est orienté globalement vers le bas.

En contrepartie, le doigt 36 exerce sur le tronçon arrière 34 un effort G orienté vers le haut. C'est cet effort G qui permet de limiter la pression de la partie arrière de la lame 30 sur la face supérieure 12s du panneau vitré 12.

Ainsi, le système d'essuyage 10 selon l'invention comporte le même nombre de composants qu'un système d'essuyage selon l'art antérieur, tout en permettant d'avoir une meilleure répartition de la pression d'appui de la lame d'essuyage 30 sur le panneau vitré 12.

## Revendications

1. Système d'essuyage (10) d'un panneau vitré (12) de véhicule automobile qui comporte :
- un balai d'essuyage (14) d'orientation principale longitudinale, comportant un élément structurel (28) en forme de bande longitudinale horizontale et une lame (30) longitudinale d'essuyage d'une face supérieure horizontale (12s) du panneau vitré (12) ;
- un bras (20) d'entraînement du balai (14) en mouvement de balayage alterné, dont une extrémité avant du bras (20) est reliée à une extrémité longitudinale arrière (14b) du balai (14) par l'intermédiaire d'un connecteur (22) d'articulation du balai (14) par rapport au bras (20) autour d'un axe transversal horizontal (B) et dont une extrémité arrière du bras (20) est reliée à une tête (18) de liaison qui est fixée à l'extrémité libre (16s) d'un arbre (16) d'entraînement du bras (20) et du balai (14) en balayage alterné autour d'un axe (A) globalement vertical ; et
- des moyens de pression du balai (14) sur le panneau vitré, qui exercent sur l'extrémité arrière du balai (14), par l'intermédiaire du bras (20) d'entraînement, un effort de pression (F) d'orientation globalement radiale par rapport à l'axe transversal (B),
**caractérisé en ce qu'**il comporte des moyens d'appui de l'extrémité arrière (14b) du balai (14), de manière à réduire les efforts de pression de la lame d'essuyage (30) sur le panneau vitré (12), en arrière de l'axe transversal d'articulation (B).

2. Système d'essuyage selon la revendication précédente, **caractérisé en ce que** les moyens d'appui sont agencés au niveau de l'extrémité longitudinale arrière (14b) du balai (14).

3. Système d'essuyage selon l'une quelconque des revendications précédentes, **caractérisé en ce que** les moyens d'appui sont solidaires du balai (14) en balayage alterné autour de l'axe vertical (A).

4. Système d'essuyage (10) selon l'une quelconque des revendications précédentes, **caractérisé en ce que** les moyens d'appui comportent un élément élastique (34) qui est porté par l'extrémité arrière (14b) du balai (14) qui coopère avec la tête (18).

5. Système d'essuyage (10) selon la revendication précédente, **caractérisé en ce que** l'élément élastique (34) est un tronçon arrière de l'élément structurel (28) du balai (14), qui fait saillie longitudinalement vers l'arrière par rapport à l'extrémité arrière (14b) du balai (14).

6. Système d'essuyage (10) selon la revendication précédente, **caractérisé en ce que** la tête (18) de liaison comporte un doigt (36) qui s'étend globalement longitudinalement vers l'avant, dont l'extrémité avant libre (36a) du doigt (36) appuie vers le haut contre le tronçon arrière (34) de l'élément structurel (28).
